(19) Europäisches Patentamt
European Patent Office
Office européen des brevets

(11) **EP 4 080 791 B1**

(12) **FASCICULE DE BREVET EUROPEEN**

(45) Date de publication et mention de la délivrance du brevet:
**04.10.2023   Bulletin 2023/40**

(21) Numéro de dépôt: **22162402.6**

(22) Date de dépôt: **16.03.2022**

(51) Classification Internationale des Brevets (IPC):
***H04B 11/00*** (2006.01)

(52) Classification Coopérative des Brevets (CPC):
**H04B 11/00**

(54) **PROCÉDÉ DE FONCTIONNEMENT D'UN SYSTÈME DE TRANSMISSION ACOUSTIQUE PERMETTANT D'OPTIMISER LA PUISSANCE TRANSMISE**

**VERFAHREN ZUM BETRIEB EINES AKUSTISCHEN ÜBERTRAGUNGSSYSTEMS ZUR OPTIMIERUNG DER ÜBERTRAGENEN LEISTUNG**

**METHOD FOR OPERATING AN ACOUSTIC TRANSMISSION SYSTEM FOR OPTIMISING THE POWER TRANSMITTED**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.03.2021   FR 2102961**

(43) Date de publication de la demande:
**26.10.2022   Bulletin 2022/43**

(73) Titulaire: **Commissariat à l'Energie Atomique et aux Energies Alternatives**
**75015 Paris (FR)**

(72) Inventeurs:
• **FREYCHET, Olivier**
  **38054 GRENOBLE Cedex 09 (FR)**
• **BOISSEAU, Sébastien**
  **38054 GRENOBLE Cedex 09 (FR)**
• **FRASSATI, François**
  **38054 GRENOBLE Cedex 09 (FR)**
• **DESPESSE, Ghislain**
  **38054 GRENOBLE Cedex 09 (FR)**

(74) Mandataire: **Cabinet Nony**
**11 rue Saint-Georges**
**75009 Paris (FR)**

(56) Documents cités:
**WO-A1-2012/141891     US-A1- 2008 258 841**

• **FREVCHET O ET AL: "A Versatile Through-Metal-Wall Acoustic Power and Data Transfer Solution", 2019 19TH INTERNATIONAL CONFERENCE ON MICRO AND NANOTECHNOLOGY FOR POWER GENERATION AND ENERGY CONVERSION APPLICATIONS (POWERMEMS), IEEE, 2 décembre 2019 (2019-12-02), pages 1-6, XP033766249, DOI: 10.1109/POWERMEMS49317.2019.92321100357**
• **LAWRY T. J. ET AL: "Electrical optimization of power delivery through thick steel barriers using piezoelectric transducers", PROCEEDINGS OF SPIE , vol. 7683 21 avril 2010 (2010-04-21), page 768314, XP055869054, 1000 20th St. Bellingham WA 98225-6705 USA ISSN: 0277-786X, DOI: 10.1117/12.852563 ISBN: 978-1-5106-4548-6 Extrait de l'Internet: URL:http://dx.doi.org/10.1117/12.852563 [extrait le 2021-12-03]**
• **FREYCHET O ET AL: "Analytical optimization of piezoelectric acoustic power transfer systems", ENGINEERING RESEARCH EXPRESS , vol. 2, no. 4 27 novembre 2020 (2020-11-27), page 045022, XP055869065, DOI: 10.1088/2631-8695/abcb4a Extrait de l'Internet: URL:https://iopscience.iop.org/article/10. 1088/2631-8695/abcb4a [extrait le 2021-12-03]**

**Description**

**Domaine technique**

La présente invention concerne le domaine général des systèmes de transmission utilisant des ondes acoustiques.

Dans un système de transmission acoustique, des informations et/ou de l'énergie sont transmises entre un émetteur et un récepteur par voie acoustique. Les informations et/ou l'énergie sont ainsi transmises sans fil et sans contact.

**Technique antérieure**

Dans certaines applications, il est nécessaire de communiquer avec des capteurs placés de part et d'autre d'une ou plusieurs parois en métal.

L'utilisation des techniques électromagnétiques (RFID, wifi, Bluetooth) n'est pas possible car les ondes électromagnétiques sont absorbées par une paroi métallique.

Une solution qui peut être utilisée dans certaines applications, consiste à percer un trou dans la paroi pour y passer des fils. Cette solution nécessite de la maintenance et peut fragiliser la structure.

Une alternative en cours de recherche dans différents laboratoires consiste à mettre en oeuvre des systèmes de transmission utilisant les ondes acoustiques, car celles-ci se propagent bien à travers le métal.

En particulier, ils sont mis en oeuvre pour la transmission de puissance lorsqu'on souhaite alimenter électriquement le(s) récepteur(s), en particulier des capteurs isolés physiquement et leur système de communication, comme par exemple dans des réservoirs ou des canalisations sous fortes pressions.

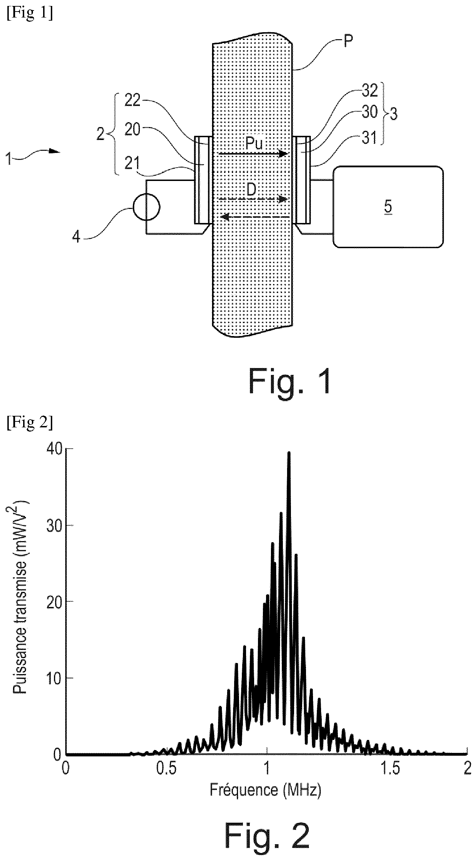

On a représenté schématiquement en figure 1, un tel système de transmission acoustique pour la transmission de puissance.

Ce système 1 comprend un émetteur acoustique 2 et un récepteur acoustique 3 en contact de part et d'autre d'une paroi métallique P.

L'émetteur acoustique 2 est constitué d'un disque piézoélectrique 20 intercalé entre deux électrodes 21, 22.

Le récepteur acoustique 2 est également constitué d'un disque piézoélectrique 30 intercalé entre deux électrodes 31, 32.

Une source de puissance électrique 4 est reliée aux deux électrodes 21, 22 de l'émetteur 2.

De l'autre côté de la paroi P, les deux électrodes 31, 32 du récepteur sont reliées à une unité électronique 5 adaptée pour gérer la puissance électrique et qui comprend un noeud de capteurs.

Le fonctionnement d'un tel système 1 est le suivant :
La puissance électrique de la source 4 est transmise en appliquant une tension sinusoïdale aux électrodes 21, 22 qui mettent en vibrations mécaniques le disque piézoélectrique 20. Les déformations mécaniques résultant de cette tension se propagent dans l'épaisseur de la paroi métallique P et sont transmises au disque piézoélectrique 30 du récepteur 3 qui sont donc converties en électricité.

Et l'unité électronique 5 peut gérer la puissance électrique reçue.

Avec un tel système 1, il est possible de faire passer de la puissance (flèche Pu en trait plein sur la figure 1) de l'émetteur 2 vers le récepteur 3 mais également de faire transiter des données dans les deux sens (flèches D en traits pointillés sur la figure 1).

Un des défauts de la transmission de puissance acoustique à travers les parois métalliques est sa forte sélectivité en fréquence : cela est illustré à la figure 2 pour une puissance normalisée transmise à travers une paroi en acier de 60 mm d'épaisseur.

Il s'avère donc nécessaire d'alimenter l'émetteur acoustique à une fréquence favorable pour obtenir un bon fonctionnement.

Par ailleurs, même si une caractérisation préalable est réalisée lors de l'installation du système, cette caractérisation ne sera pas fiable dans le temps, car les fréquences préférentielles sont fortement dépendantes de la température.

En outre, la caractérisation préalable n'est pas forcément possible selon les configurations.

De manière générale, les inventeurs ont analysé que pour maximiser la puissance acoustique transmise, il était judicieux de déterminer à la fois la fréquence optimale et la charge électrique à connecter au niveau du récepteur acoustique.

Différentes solutions permettant de choisir la fréquence optimale de la transmission de puissance ont déjà été proposées.

La demande de brevet US2020/0204271 propose à cette fin de choisir la fréquence où l'admittance d'entrée est minimale. Cela ne garantit pas que l'on se place au maximum de rendement ou de puissance transmise, ni ne permet de déterminer la charge électrique à connecter.

US2015/0049587 propose de choisir la fréquence permettant d' avoir la tension la plus élevée sur la capacité de stockage connectée sur le récepteur. Cela nécessite d'avoir préalablement établi la communication pour que le récepteur puisse envoyer le niveau de charge de la capacité. De plus, cette solution ne permet pas de déterminer la charge électrique à connecter.

US2014/0016558 caractérise le système acoustique préalablement à toute transmission. Ainsi, la charge électrique optimale à connecter sur le récepteur est déterminée initialement avec un analyseur de réseau vectoriel. Cela implique d'avoir un accès physique aux deux côtés de la paroi métallique, ce qui n'est pas systématiquement réalisable selon les applications. En outre, cette détermination réalisée initialement n'est plus forcément valable lors du fonctionnement, et si les conditions changent, par exemple en cas de changement de température. Par ailleurs, en fonctionnement, la fréquence est choisie en communiquant à l'émetteur la puissance reçue par le récepteur. Or, cela implique d'avoir préalablement établi la communication pour que le récepteur puisse communiquer des données.

US2010/0027379 décrit un fonctionnement dans lequel la fréquence déterminée l'est par la plus grande amplitude du signal reçu. Cela nécessite d'avoir préalablement établi la communication pour que le récepteur puisse envoyer l'amplitude du signal reçu. Aucune détermination de charge électrique à connecter n'est réalisée.

En résumé, les solutions existantes décrites ci-avant ne permettent pas de choisir la fréquence optimale pour maximiser la transmission de puissance sans qu'une communication de données ne soit préalablement établie avec le récepteur, ni ne permettent de choisir la charge électrique à connecter au niveau du récepteur, avant et pendant le fonctionnement, également pour maximiser la transmission de puissance.

Par conséquent, il existe un besoin d'améliorer les solutions de fonctionnement d'un système de transmission acoustique, afin de pallier les inconvénients précités pour maximiser la puissance acoustique transmise.

Un but de l'invention est de répondre, au moins partiellement à ce besoin.

**Exposé de l'invention**

Pour ce faire, l'invention a tout d'abord pour objet un procédé de fonctionnement d'un système de transmission acoustique, comprenant les étapes suivantes :

i/ mise en place du système à au moins un émetteur et au moins un récepteur acoustique sur un support, le système étant un quadripôle électrique dont la matrice d'impédance, liant les tensions d'émetteur ($U_1$) et de récepteur ($U_2$) aux courants d'émetteur ($I_1$) et de récepteur ($I_2$), s'écrit selon l'équation :

[Equation 1] :

$$\begin{pmatrix} U_1 \\ U_2 \end{pmatrix} = \begin{pmatrix} Z_{11}(f) & Z_{12}(f) \\ Z_{21}(f) & Z_{22}(f) \end{pmatrix} \begin{pmatrix} I_1 \\ I_2 \end{pmatrix}$$

le quadripôle étant réciproque avec $Z_{12}$ étant égal à $Z_{21}$ ;

ii/ balayage en fréquence en trois fois consécutivement avec à chaque fois une charge électrique connectée au récepteur $Z_{load}$ distincte de celle qui précède, de sorte à déterminer, pour chaque fréquence, les valeurs de $Z_{11}$, $Z_{12}$ et de $Z_{22}$ ;

iii/ à partir de la détermination des valeurs de $Z_{11}$, $Z_{12}$ et de $Z_{22}$, détermination d'une fréquence caractéristique ($f_{opt}$) afin de maximiser la puissance transmise, la tension de récepteur ($U_2$) ou le rendement du système.

Selon un mode de réalisation avantageux, l'étape iii/ comprenant les sous-étapes suivantes :

iii1/ détermination de la fréquence caractéristique (fopt) à partir de la détermination de la puissance maximale atteignable à chaque fréquence (f) par la relation,

[Equation 9] :

$$\bar{P}(f) = \frac{1}{2} \Re \left( Z_{22} - \frac{Z_{12}^2}{Z_{11}} \right) \left| \frac{Z_{12}}{2Z_{11}Z_{22} - 2Z_{12}^2} \right|^2$$

iii2/ application de deux charges électriques connectées au récepteur Zload distinctes entre elles, lors de l'émission d'un signal sinusoïdal par l'émetteur, de sorte à déterminer la charge électrique optimale, à partir du théorème de Thévenin et la relation $Z_{Load} = Z_{out}^*$ ,

la détermination de la fréquence caractéristique et la charge électrique optimale permettant de maximiser la puissance transmise.

Selon un mode de réalisation avantageux, le système acoustique peut comprendre plusieurs émetteurs et plusieurs récepteurs acoustiques. Dans un tel mode, chaque récepteur est dimensionné pour être alimenté dans une plage de fréquence différente des autres récepteurs. Par exemple, on peut réaliser un ajustement des dimensions du récepteur pour résonner à une fréquence à l'intérieure d'une plage de fréquence prédéterminée.

Le procédé peut alors être exécuté dans chacune des plages de fréquence respectives pour déterminer la fréquence caractéristique (fopt) qui maximise la puissance transmise, la tension de récepteur ou le rendement, pour chacun des récepteurs.

Selon une configuration, le support est une paroi notamment métallique, l'émetteur et le récepteur étant agencés du même côté ou de part et d'autre de la paroi. Le procédé selon l'invention peut être mis en oeuvre pour un système de transmission acoustique à travers un support dans n'importe quel matériau qui présente typiquement une impédance acoustique caractéristique comprise entre 1 et 100 MRayl.

Avantageusement, les charges électriques distinctes connectées au récepteur lors de l'étape ii/ sont respectivement une charge infinie correspondant à un circuit électrique ouvert au récepteur, une charge de valeur connue, et une charge nulle correspondant à un court-circuit au récepteur.

Selon une première variante, la durée entre chaque balayage de fréquence est définie par le récepteur qui attend une durée prédéfinie, connue de l'émetteur.

Selon une deuxième variante, la durée entre chaque balayage de fréquence est définie par le récepteur qui indique à l'émetteur par une alternance de la charge connectée qu'il est prêt, puis change la charge électrique connectée.

Selon une troisième variante, la durée entre chaque balayage de fréquence est définie par un changement de l'impédance du côté de l'émetteur sans composants actifs du côté du récepteur.

Selon un mode de réalisation avantageux, l'étape iii/ comprend les sous-étapes suivantes :

iii1/ détermination de la fréquence caractéristique (fopt) à partir de la détermination de la puissance maximale atteignable à chaque fréquence (f) par la relation,

[Equation 9] :

$$\bar{P}(f) = \frac{1}{2} \Re \left( Z_{22} - \frac{Z_{12}^2}{Z_{11}} \right) \left| \frac{Z_{12}}{2Z_{11}Z_{22} - 2Z_{12}^2} \right|^2$$

iii2/ application de deux charges électriques connectées au récepteur Zload distinctes entre elles, lors de l'émission d'un signal sinusoïdal par l'émetteur, de sorte à déterminer la charge électrique optimale, à partir du théorème de Thévenin et la relation $Z_{Load} = Z_{out}^*$ ,

la détermination de la fréquence caractéristique et la charge électrique optimale permettant de maximiser la puissance transmise.

L'étape iii2/ comprend l'une ou l'autre des étapes suivantes :

- le maintien de la tension U1 à l'émetteur à une fréquence constante ;
- l'application d'une des deux charges électriques distinctes sans coupure du signal par l'émetteur ;
- la mesure, du côté du récepteur, durant la connexion de la première charge électrique, de l'amplitude du signal de la tension U2 ou du courant I2 ;
- avant la déconnexion de la première charge électrique, la répétition d'un élément de phase comme si le signal sinusoïdal U2 ou I2 était poursuivi ;
- l'application de la deuxième charge électrique ;
- la mesure de l'amplitude de U2 ou I2 et de la phase avec le signal poursuivi avant la déconnexion de la première charge.

Ainsi, l'invention consiste essentiellement en un système pour la transmission de puissance acoustique, qui va déterminer la fréquence et la charge électrique optimales sans qu'une communication de données ne soit préalablement établie avec le récepteur.

Une fois la fréquence et la charge électrique optimales déterminées, la transmission de puissance se fait correctement, et il est possible d'établir la communication.

Afin de conserver la puissance optimale, il est nécessaire d'ajuster régulièrement les valeurs de fréquence et de charge électrique.

Cet ajustement peut être réalisé soit en réitérant la méthode décrite ci-dessus, soit grâce à la communication alors établie entre l'émetteur et le récepteur, permettant l'envoi de données décrivant la qualité de la transmission de puissance.

Les avantages de l'invention sont nombreux parmi lesquels on peut citer un gain important dans la robustesse de systèmes de transmission de puissance acoustique.

L'invention concerne également l'application du procédé qui vient d'être décrit pour envoyer de la puissance électrique à travers une paroi métallique, notamment une paroi métallique d'un navire, d'un sous-marin, d'un réservoir, d'une cuve, d'un tuyau.

D'autres avantages et caractéristiques ressortiront mieux à la lecture de la description détaillée, faite à titre illustratif et non limitatif, en référence aux figures suivantes.

**Brève description des dessins**

[Fig 1] la figure 1 est une représentation schématique montrant un exemple de système de transmission acoustique à travers une paroi métallique conforme à l'invention.

[Fig 2] la figure 2 illustre le spectre de puissance acoustique normalisée en fonction de la fréquence, obtenue à travers une paroi métallique selon l'état de l'art.

[Fig 3] la figure 3 est une représentation sous la forme d'un quadripôle électrique d'un système de transmission acoustique à travers une paroi métallique.

[Fig 4] la figure 4 représente le schéma électrique équivalent du quadripôle selon la figure 3 obtenu par application du théorème de Thévenin.

[Fig 5] la figure 5 est un diagramme bloc des séquences des étapes essentielles du procédé de fonctionnement selon l'invention.

[Fig 6] la figure 6 illustre sous forme de spectres, la matrice d'impédance et de la puissance transmise à partir de l'émetteur d'un système de transmission acoustique, en appliquant les séquences de l'étape de détermination de la charge électrique du procédé selon l'invention.

[Fig 7] la figure 7 est un diagramme bloc des séquences des étapes essentielles du procédé de fonctionnement selon l'invention, sous forme de grafcet, tel qu'il peut être mis en oeuvre par un programme d'ordinateur au sein de l'unité de contrôle d'un système de transmission acoustique.

**Description détaillée**

Les figures 1 et 2 ont déjà été commentées en préambule. Elles ne seront donc pas détaillées ci-après.

On décrit ci-après un procédé de fonctionnement d'un système de transmission acoustique selon l'invention permettant de maximiser la puissance acoustique transmise.

<u>Etape i/ :</u> On met en place un système de transmission acoustique 1 tel que montré sur la figure 1.

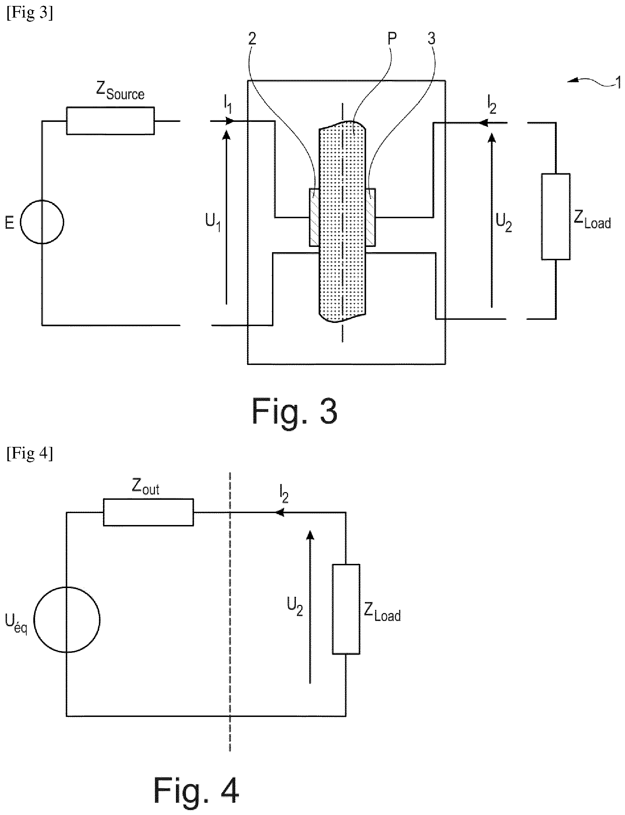

Ce système 1 peut être caractérisé comme étant un quadripôle électrique schématisé en figure 3.

De plus, ce système est linéaire, même pour de grandes amplitudes d'excitations : voir publication 1.

Il peut donc être correctement décrit par sa matrice d'impédance, les tensions d'émetteur (U1) et de récepteur (U2) aux courants d'émetteur (I1) et de récepteur (I2), selon l'équation :

[Equation 1] :

$$\begin{pmatrix} U_1 \\ U_2 \end{pmatrix} = \begin{pmatrix} Z_{11}(f) & Z_{12}(f) \\ Z_{21}(f) & Z_{22}(f) \end{pmatrix} \begin{pmatrix} I_1 \\ I_2 \end{pmatrix}.$$

Ainsi, pour chaque fréquence, la connaissance de $Z_{11}$, $Z_{12}$, $Z_{21}$, et $Z_{22}$, permet de déterminer le comportement du système.

Il est alors possible de déterminer la puissance transmise pour chaque fréquence permettant ainsi de choisir la fréquence optimale pour le maximum de puissance: voir publication 2.

Le système est un quadripôle réciproque, d'où: $Z_{12} = Z_{21}$.

Dans une configuration la plus contraignante, il est seulement possible d'avoir accès à l'émetteur 2, c'est-à-dire à l'entrée du quadripôle réciproque.

Pa conséquent, seule la mesure d'impédance d'entrée est possible.

Les inventeurs ont donc pensé à faire trois mesures différentes pour pouvoir déterminer les valeurs de $Z_{11}$, $Z_{12}$ et $Z_{22}$.

L'impédance d'entrée Zin d'un quadripôle est donnée par:

[Equation 2] :

$$Zin = Z_{11} - \frac{Z_{12}^2}{Z_{22} + Z_{Load}}$$

Dans laquelle $Z_{load}$ est l'impédance de la charge connectée au récepteur 3 (figure 3).

Lorsque l'impédance électrique connectée au niveau du récepteur est changée, l'impédance d'entrée du quadripôle change également.

Etape ii et iii1/ :

Changer trois fois l'impédance de charge connectée sur le récepteur, permet de déterminer $Z_{11}$, $Z_{12}$ et $Z_{22}$.

Cette méthode fonctionne pour trois impédances Z connectées différentes.

Par exemple, les trois impédances différentes peuvent être :

- lorsqu'un circuit-ouvert est appliqué, alors $Z_{Load}$ = $+\infty$ ,

- lorsqu'une impédance de valeur connue est appliquée, alors $Z_{Load}$ = Z

- lorsqu'un circuit fermé est appliqué, alors $Z_{Load}$ = 0.

Ainsi, pour une mesure de l'impédance d'entrée avec un circuit-ouvert sur la sortie ( $Z_{in}^{CO}$ ), l'impédance connectée est Z = $+\infty$, d'où $Z_{11} = Z_{in}^{CO}$

Pour une mesure de l'impédance d'entrée avec une charge connue sur la sortie ( $Z_{in}^{Z_{Load}}$ ), l'impédance connectée est Z = $Z_{Load}$, d'où

[Equation 3] :

$$Z_{in}^{Z_{Load}} = Z_{11} - \frac{Z_{12}^2}{Z_{22} + Z_{Load}}$$

Et donc,

[Equation 4] :

$$Z_{22} = Z_{Load} \left( \frac{Z_{in}^{CO} - Z_{in}^{Z_{Load}}}{Z_{in}^{Z_{Load}} - Z_{in}^{CC}} \right)$$

Pour une mesure de l'impédance d'entrée avec, lorsque la sortie est court-circuitée ( $Z_{in}^{CC}$ ), l'impédance connectée est Z = 0 d'où

[Equation 5] :

$$Z_{in}^{CC} = Z_{11} - \frac{Z_{12}^2}{Z_{22}}$$

Et donc,

[Equation 6] :

$$Z_{12} = \sqrt{(Z_{in}^{CO} - Z_{in}^{CC})Z_{22}}$$

Avec ces trois mesures, les valeurs de $Z_{11}$, $Z_{12}$ et $Z_{22}$ sont ainsi déterminées.
Il est alors possible d'appliquer les formules données dans la publication 2, afin d'obtenir la puissance transmise normalisée par la tension d'entrée.
La puissance transmise normalisée est donnée par :

[Equation 7]:

$$\bar{P}(f, Z_{Load}) = \frac{P_{out}}{|U_1|^2} = \frac{Re(Z_{Load})}{2} \left| \frac{Z_{12}}{Z_{in}(Z_{22} + Z_{Load})} \right|^2$$

Avec

[Equation 2] :

$$Z_{in} = Z_{11} - \frac{Z_{12}^2}{Z_{22} + Z_{Load}}$$

Aussi, la puissance normalisée est maximisée pour chaque fréquence f lorsque :

[Equation 8] :

$$Z_{Load}(f) = \left( \frac{Z_{22}Z_{11} - Z_{12}^2}{Z_{11}} \right)^* .$$

En remplaçant cette expression dans celle de la puissance, la puissance maximale atteignable à chaque fréquence est :

[Equation 9] :

$$\bar{P}(f) = \frac{1}{2}\Re\left(Z_{22} - \frac{Z_{12}^2}{Z_{11}}\right)\left|\frac{Z_{12}}{2Z_{11}Z_{22} - 2Z_{12}^2}\right|^2$$

avec $\Re$ étant la partie réelle d'un nombre complexe.

Par conséquent, en réalisant trois balayages en fréquence, en changeant pour chaque balayage la charge électrique connectée sur le récepteur (Z différent à chaque balayage), la fréquence qui maximise la puissance de sortie peut être déterminée.

Changer la charge connectée au niveau du récepteur ne demande que très peu d'énergie. Il est donc possible de déterminer la fréquence optimale avec très peu d'énergie stockée côté récepteur 3, en ayant accès qu'au côté émetteur 2 du système.

Une fois la fréquence optimale trouvée, l'émetteur 2 est alimenté en permanence avec cette fréquence.

L'émetteur peut alors déclencher l'étape iii2/ complémentaire lui permettant de déterminer la charge électrique optimale appliquée au niveau du récepteur 3 afin de maximiser la puissance acoustique transmise.

Etape iii2/ :

Les inventeurs considèrent que l'impédance connectée a un impact important sur la puissance récupérée.

En effet, en considérant une variation de charge résistive de 0 à l'infini, on récupère de la puissance électrique, c'est-à-dire celle dissipée par la résistance. Pour ces deux extrêmes, la puissance récupérée est nulle (tension nulle ou courant nul).

Il existe donc une puissance maximale à récupérer.

Trouver cette puissance maximale par itération est très long puisqu'il s'agit de tester toutes les charges électriques possibles du côté du récepteur, celles-ci étant par ailleurs résistives et réactives.

Les inventeurs ont donc pensé à une méthode qui permet de s'affranchir de cette itération.

Puisque, le système de transmission acoustique 1 est linéaire, alors les inventeurs considèrent que le théorème de Thévenin peut être appliqué.

Pour rappel, ce théorème s'énonce comme suit : « *Un réseau électrique linéaire vu de deux points est équivalent à un générateur de tension parfait dont la force électromotrice est égale à la différence de potentiels à vide entre ces deux points, en série avec une impédance égale à celle que l'on mesure entre les deux points lorsque les générateurs indépendants sont rendus passifs* ».

Ainsi, le système 1 peut être considéré comme un schéma électrique équivalent obtenu par application du théorème de Thévenin, tel que montré à la figure 4.

Par application du théorème de la puissance maximale, la puissance sur la charge $Z_{out}$ est maximale lorsque :

$$Z_{Load} = Z_{out}^*$$

avec $Z_{out}^*$ , le complexe conjugué de $Z_{out}$ :voir publication 3.

Dans le cas d'une charge purement résistive, la puissance transmise sur la charge est maximale lorsque $Z_{Load} = |Z_{out}|$.

Ainsi, la connaissance de $Z_{out}$ permet de déterminer la charge électrique optimale pour obtenir le maximum de puissance.

Il s'agit donc de déterminer $Z_{out}$. Cette grandeur complexe (résistive et réactive) peut être déterminée selon deux méthodes différentes :

- soit en court-circuitant l'émetteur et en mesurant l'impédance de sortie ;
- soit en réalisant deux mesures successives sur la sortie (récepteur) lorsque l'émetteur émet un signal sinusoïdal.

La première méthode implique que le récepteur doive alors émettre une tension sinusoïdale, ce qui nécessite une énergie assez importante.

Aussi, la deuxième méthode nécessitant moins d'énergie, les inventeurs l'ont privilégié.

Selon cette deuxième méthode, en considérant, [Equation10] : $U_{éq} + Z_{out}I_2 = U_2$ , il existe deux variables ($U_{éq}$, $Z_{out}$).

Il faut donc deux équations pour les déterminer. Celles-ci sont obtenues en connectant sur le récepteur 3, deux impédances de valeurs différentes.

Par exemple, ces valeurs peuvent être lorsque les charges sont en circuit-ouvert et court-circuit.

Lorsque le récepteur 3 est en circuit-ouvert, $I_2 = 0$, et alors $U_{éq} = U_2^{CO}$.

En court-circuitant le récepteur 3, $U_2 = 0$, ce qui permet de déterminer $Z_{out}$ selon :

$$[\text{Equation 11}]: Z_{out} = -\frac{U_2^{CO}}{I_2^{CC}}.$$

D'où :

$$[\text{Equation 12}] :$$

$$\begin{cases} Z_{out} = \frac{\left(U_2^{Z_2} U_1^{Z_1} - U_2^{Z_1} U_1^{Z_2}\right) Z_1 Z_2}{U_2^{Z_1} U_1^{Z_2} Z_2 - U_2^{Z_2} U_1^{Z_1} Z_1} \\ U_{éq} = U_2^{Z_1} \frac{Z_1 + Z_{out}}{U_1^{Z_1} Z_1} \end{cases}$$

La phase entre $U_2^{CO}$ et $I_2^{CC}$ est importante pour déterminer les partie réelles et imaginaires de $Z_{out}$. En effet, l'impédance optimale à connecter en sortie peut avoir une composante réactive, comme déjà mentionné.

Une difficulté est que la tension $U_2^{CO}$ et le courant $I_2^{CC}$ sont mesurés de manière décalée dans le temps et que par ailleurs, coté récepteur, il n'y a pas d'accès au signal $U_1$ émis.

Il n'est alors pas possible de faire une mesure directe de déphasage entre $U_2^{CO}$ et $I_2^{CC}$, ni entre $U_2^{CO}$ et $U_1$, ni entre $I_2^{CC}$ et $U_1$.

Pour contourner cette difficulté, les inventeurs ont pensé à une solution en plusieurs étapes.

La première étape consiste à maintenir la tension $U_1$ à l'émetteur 2, à une fréquence constante pendant toute la durée des deux mesures, c'est à dire avec les deux charges différentes (circuit ouvert et court-circuit) sans coupure du signal entre les deux mesures.

La deuxième étape consiste à mesurer, du côté récepteur 3, durant la connexion de la première charge, la fréquence et la phase du signal, de la tension $U_2$ ou du courant $I_2$. Par exemple, en mettant à zéro un compteur, lorsque $U_2$ ou $I_2$ passe par zéro (en valeur croissante ou décroissante), et en enregistrant la valeur du compteur au prochain passage par zéro de ce courant, dans la même direction (croissante ou décroissante) juste avant de remettre le compteur à zéro.

La troisième étape consiste, juste avant la déconnexion de la première charge, à poursuivre jusqu'à obtenir la répétition d'un élément de phase comme si le signal se poursuivait. Par exemple, dans l'exemple du compteur, le compteur n'est plus mis à zéro au passage par zéro de la tension $U_2$ ou du courant $I_2$, mais lorsque le compteur atteint la valeur qui avait été mesurée/enregistrée précédemment en fin de période.

Ainsi, lorsque la deuxième valeur de charge est connectée, la phase du courant $I_2$ et/ou de la tension $I_2$ peut être comparée à cet élément de phase reconduit/répété. Par exemple, il est possible de mesurer la distance temporelle ou angulaire entre le passage par zéro du signal $U_2$ et/ou $I_2$ avec le passage par zéro théorique (au retour à zéro du compteur) du signal $U_2$ ou $I_2$ mesuré durant la première charge comme si le signal continuait d'exister.

Par « juste avant », on entend en pratique, une compensation du délai associé si nécessaire en remettant le compteur à 1, ou quelques coups d'horloge, au lieu de zéro pour compenser le retard induit dans la mise à zéro.

L'impédance $Z_{out}$ peut alors être déterminée ainsi que la charge électrique optimale.

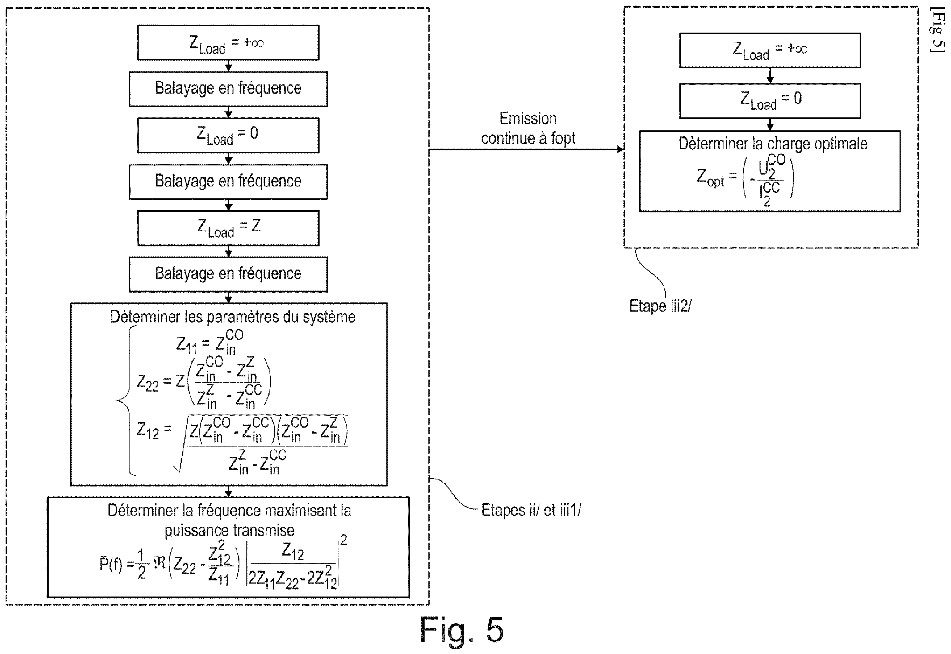

Les étapes ii/ et iii/ qui viennent d'être décrites permettant de déterminer la fréquence et la charge à connecter pour maximiser la puissance transmise au récepteur 3 sont synthétisées sur la figure 5.

Les étapes ii/ et iii1/ ont été validées expérimentalement avec un système 1 sur une paroi en aluminium de 60 mm d'épaisseur.

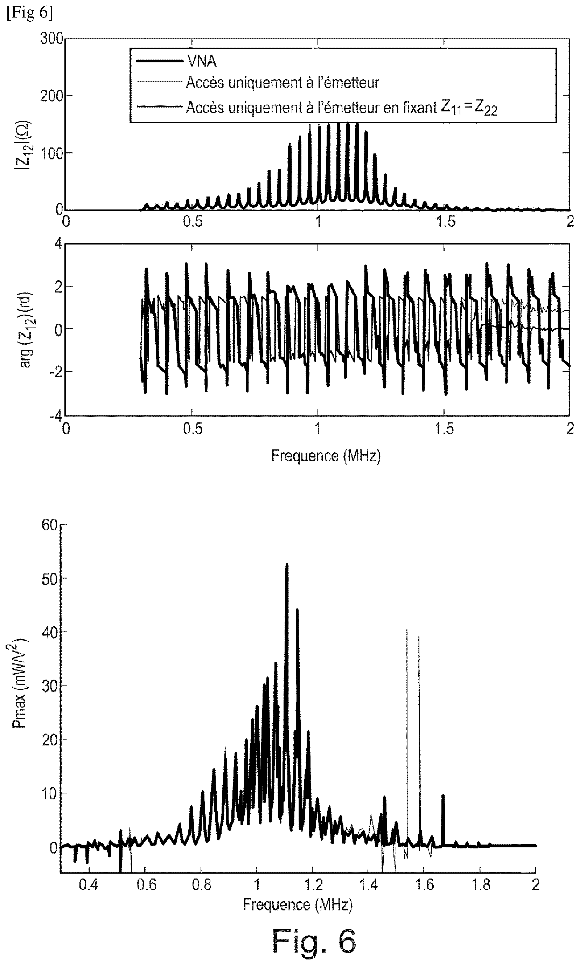

Les spectres obtenus tels que montrés à la figure 6, indiquent que le procédé selon l'invention permet bien d'obtenir la meilleure fréquence de fonctionnement qui maximise la puissance transmise.

Comme déjà mentionné, lors des balayages en fréquence réalisés durant les étapes ii/ et iii/, il est nécessaire de changer trois fois la charge électrique connectée au niveau du récepteur. Chaque changement de charge électrique doit être fait après la fin du balayage en fréquence en cours, et avant le début du balayage suivant, afin d'éviter de perturber fortement la mesure.

La durée nécessaire pour le changement peut être définie selon les trois alternatives suivantes qui peuvent être combinées :

a/ Attente d'une durée prédéfinie : en définissant une durée d'attente, préalablement connue de l'émetteur et du récepteur. Le récepteur attend ainsi cette durée d'attente connue de l'émetteur après la fin du premier balayage en fréquence, avant de changer la charge électrique connectée ;

b/ Attente d'une information de la part du récepteur : le récepteur indique à l'émetteur par une alternance de la charge connectée qu'il est prêt pour la suite des mesures et va changer la charge connectée. Cette variation au niveau du récepteur est visible du côté de l'émetteur et est utilisée parfois comme méthode de communication : [4].

c/ Observation de l'impédance d'entrée et à partir de cette mesure, détection d'un changement d'impédance de sortie : lorsque le système est symétrique (paroi symétrique et émetteur et récepteur identiques), $Z_{11}=Z_{22}$. Avec cette contrainte, deux charges électriques seulement sont nécessaires pour caractériser le système. Ces deux charges peuvent être appliquées de manière passive sur le récepteur grâce à un pont de diodes et une capacité connectés au niveau du récepteur. Lors d'un premier balayage, la capacité est déchargée et impose une tension nulle, le comportement en entrée du pont de diode est donc équivalent à un circuit-fermé. En réalisant plusieurs balayages en fréquence, la tension va augmenter aux bornes de la capacité, ce qui se traduit par des phases de conduction et de non-conduction des diodes. Ce comportement non linéaire va pouvoir être analysé au niveau de l'émetteur via une variation de l'impédance d'entrée. L'émetteur peut alors réduire le niveau de tension d'excitation afin que la tension sur le pont de diode soit toujours inférieure à la tension de la capacité. Les diodes sont donc bloquantes 100% du temps et l'impédance connectée au récepteur est un circuit-ouvert. Il est alors possible de caractériser le système sans rien changer au niveau du récepteur.

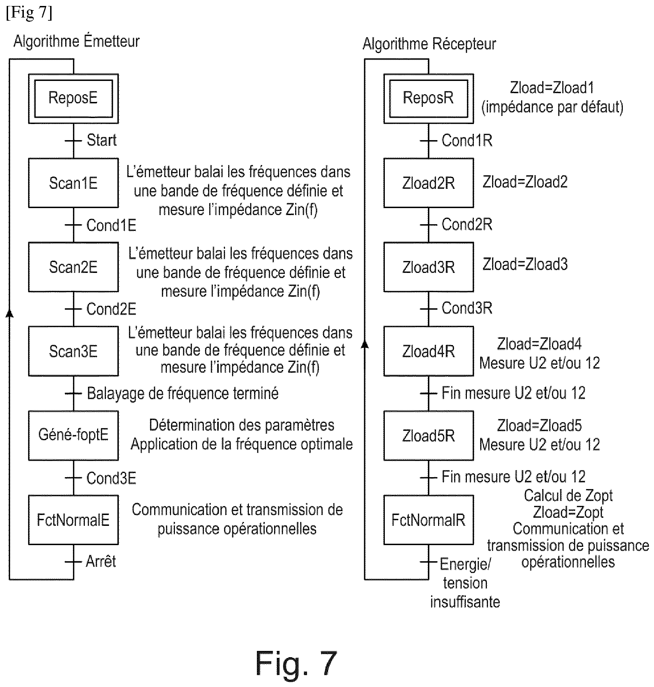

La figure 7 montre les séquences des différentes étapes qui viennent d'être décrites au niveau de l'émetteur et du récepteur sous une forme algorithmique de type GRAFCET.

Sur cette figure 7, les conditions de passage d'une séquence à l'autre sont les suivantes :

- Cond1E : au choix ou en combinaison:

    a/ Attente d'une durée prédéfinie,

    b/ Attente d'une information de la part du récepteur (exemple: modulation de charge),

    c/ Observation de l'impédance d'entrée et à partir de cette mesure, détection d'un changement d'impédance de sortie.

- Cond2E : au choix ou en combinaison :

    a/ Attente d'une durée prédéfinie,

    b/ Attente d'une information de la part du récepteur (exemple : modulation de charge),

    c/ Observation de l'impédance d'entrée et à partir de cette mesure, détection d'un changement d'impédance de sortie.

- Cond3E : au choix ou en combinaison :

    a/ Attente d'une durée prédéfinie,

    b/ Attente d'une information de la part du récepteur (ex: modulation de charge, ou communication sur une autre bande de fréquence).

- Cond1R : au choix ou en combinaison :

    a/ Attente d'une durée prédéfinie,

    b1/ Attente d'un certain niveau de tension/d'énergie,

c1/ Attente d'une certaine fréquence reçue.

- Cond2R : au choix ou en combinaison:

    a/ Attente d'une durée prédéfinie,

    b1/ Attente d'un certain niveau de tension/d'énergie,

    c1/ Attente d'une certaine fréquence reçue.

- Cond3R : au choix ou en combinaison :

    a/ Attente d'une durée prédéfinie,
    b1/ Attente d'un certain niveau de tension/d'énergie,
    c1/ Attente d'une certaine fréquence reçue.

D'autres avantages et améliorations pourront être apportés sans pour autant sortir du cadre de l'invention.

Dans l'exemple détaillé, pour la détermination des paramètres du quadripôle ($Z_{11}$, $Z_{12}$ et $Z_{22}$) et de la charge électrique optimale au récepteur ($Z_{opt}$), la méthode selon l'invention consiste à choisir comme charges distinctes, une charge infinie (circuit ouvert), une charge nulle (court-circuit) et une charge quelconque autre qu'infinie et nulle. Cependant, la méthode peut être mise en oeuvre quelles que soient les charges électriques connectées, à condition que celles-ci soient distinctes.

Par ailleurs, la méthode détaillée ci-avant concerne la détermination de la fréquence permettant de maximiser la puissance transmise. Cependant, en fonction des besoins, il est tout à fait possible de choisir la fréquence maximisant la tension au récepteur U2 ou le rendement du système. En effet la connaissance pour chaque fréquence de $Z_{11}$, $Z_{12}$ et de $Z_{22}$ permet de prédire le comportement d'un système de transmission acoustique et donc de le faire fonctionner avec un paramètre optimisé en fonction de l'application recherchée.

La méthode détaillée ci-avant est décrite en relation avec une transmission acoustique à travers une paroi métallique. L'invention peut aussi s'appliquer à un support en un autre matériau dont l'impédance acoustique caractéristique est typiquement comprise entre 1 et 100 MRayl. Il peut s'agit par exemple, d'un matériau choisi parmi les aciers, aluminium et autres métaux, béton, bitume, bois, plastiques rigides, porcelaine, verre...

Par ailleurs, la méthode détaillée ci-avant est décrite en relation d'un émetteur et un récepteur agencés de part et d'autre d'une même paroi métallique. Elle s'applique aussi à un émetteur et un récepteur du même côté de la paroi, et plus généralement sur un même support.

La méthode selon l'invention peut s'appliquer aussi pour les systèmes inductifs à air ou avec circuits magnétiques, tant que le système reste linéaire, soit en petits signaux (loin de la saturation des matériaux magnétiques).

La méthode selon l'invention est cependant plus adaptée à la transmission de puissance acoustique, pour lesquelles les fréquences optimales de fonctionnement sont difficilement prédictibles, reproductibles et dépendant fortement de variables extérieures telles que la température.

Les fréquences optimales de fonctionnement sont difficilement prédictibles car le fonctionnement est très dépendant du milieu de transmission. En RF, le milieu de propagation est généralement l'air, ou sinon un intermédiaire maitrisé/conçu par le concepteur du système et il n'y a pas autant d'aléas et d'impacts du milieu de propagation. L'invention n'est pas limitée aux exemples qui viennent d'être décrits; on peut notamment combiner entre elles des caractéristiques des exemples illustrés au sein de variantes non illustrées.

**Liste des références citées**

1: T. J. Lawry et al., « Electrical optimization of power delivery through thick steel barriers using piezoelectric transducers », in Energy Harvesting and Storage: Materials, Devices, and Applications, avr. 2010, vol. 7683, p. 768314, doi: 10.1117/12.852563.

2: O. Freychet, F. Frassati, S. Boisseau, N. Garraud, P. Gasnier, et G. Despesse, «Analytical optimization ofpiezoelectric acoustic power transfer systems », Eng. Res. Express, vol. 2, no 4, p. 045022, nov. 2020, doi: 10.1088/2631-8695/abcb4a.

3: O. Freychet et al., « Efficient optimal load and maximum output power determination for linear vibration energy harvesters with a two-measurement characterization method », Smart Mater. Struct., vol. 29, no 1, p. 015003, nov. 2019, doi: 10.1088/1361-665X/ab516f.

4: G. J. Saulnier et al., « P1G-4 Through-Wall Communication of Low-Rate Digital Data Using Ultrasound », in 2006 IEEE Ultrasonics Symposium, oct. 2006, p. 1385-1389, doi: 10.1109/ULTSYM.2006.358.

**Revendications**

1. Procédé de fonctionnement d'un système de transmission acoustique, comprenant les étapes suivantes :

   il mise en place du système (1) à au moins un émetteur (2) et au moins un récepteur (3) acoustique sur un support, le système étant un quadripôle électrique dont la matrice d'impédance, liant les tensions d'émetteur ($U_1$) et de récepteur ($U_2$) aux courants d'émetteur ($I_1$) et de récepteur ($I_2$), s'écrit selon l'équation :

   [Equation 1] :

   $$\begin{pmatrix} U_1 \\ U_2 \end{pmatrix} = \begin{pmatrix} Z_{11}(f) & Z_{12}(f) \\ Z_{21}(f) & Z_{22}(f) \end{pmatrix} \begin{pmatrix} I_1 \\ I_2 \end{pmatrix}$$

   le quadripôle étant réciproque avec $Z_{12}$ étant égal à $Z_{21}$, **caractérisé en ce que** le procédé comprend les étapes:

   ii/ balayage en fréquence en trois fois consécutivement avec à chaque fois une charge électrique connectée au récepteur $Z_{load}$ distincte de celle qui précède, de sorte à déterminer, pour chaque fréquence, les valeurs de $Z_{11}$, $Z_{12}$ et de $Z_{22}$ ;
   iii/ à partir de la détermination des valeurs de $Z_{11}$, $Z_{12}$ et de $Z_{22}$, détermination d'une fréquence caractéristique ($f_{opt}$) afin de maximiser la puissance transmise, la tension de récepteur ($U_2$) ou le rendement du système.

2. Procédé selon la revendication 1, le support étant une paroi notamment métallique, l'émetteur et le récepteur étant agencés du même côté ou de part et d'autre de la paroi.

3. Procédé selon la revendication 1 ou 2, les charges électriques distinctes connectées au récepteur lors de l'étape ii/ étant respectivement une charge infinie correspondant à un circuit électrique ouvert au récepteur, une charge de valeur connue, et une charge nulle correspondant à un court-circuit au récepteur.

4. Procédé selon l'une des revendications 1 à 3, la durée entre chaque balayage de fréquence étant définie par le récepteur qui attend une durée prédéfinie, connue de l'émetteur.

5. Procédé selon l'une des revendications 1 à 3, la durée entre chaque balayage de fréquence étant définie par le récepteur qui indique à l'émetteur par une alternance de la charge connectée qu'il est prêt, puis change la charge électrique connectée.

6. Procédé selon l'une des revendications 1 à 3, la durée entre chaque balayage de fréquence étant définie par un changement de l'impédance du côté de l'émetteur sans composants actifs du côté du récepteur.

7. Procédé selon l'une des revendications précédentes, l'étape iii/ comprenant les sous-étapes suivantes :

   iii1/ détermination de la fréquence caractéristique (fopt) à partir de la détermination de la puissance maximale atteignable à chaque fréquence (f) par la relation,

   [Equation 9] :

   $$\bar{P}(f) = \frac{1}{2} \Re \left( Z_{22} - \frac{Z_{12}^2}{Z_{11}} \right) \left| \frac{Z_{12}}{2Z_{11}Z_{22} - 2Z_{12}^2} \right|^2$$

iii2/ application de deux charges électriques connectées au récepteur Zload distinctes entre elles, lors de l'émission d'un signal sinusoïdal par l'émetteur, de sorte à déterminer la charge électrique optimale, à partir du théorème de Thévenin et la relation $Z_{Load} = Z_{out}^{*}$ ,
la détermination de la fréquence caractéristique et la charge électrique optimale permettant de maximiser la puissance transmise.

8. Procédé selon la revendication 7, l'étape iii2/ comprenant le maintien de la tension U1 à l'émetteur (2) à une fréquence constante l'application d'une des deux charges électriques distinctes sans coupure du signal par l'émetteur.

9. Procédé selon la revendication 7, l'étape iii2/ comprenant la mesure, du côté du récepteur (3), durant la connexion de la première charge électrique, de l'amplitude du signal de la tension U2 ou du courant I2.

10. Procédé selon la revendication 7, l'étape iii2/ comprenant avant la déconnexion de la première charge électrique, la répétition d'un élément de phase comme si le signal sinusoïdal était poursuivi.

11. Procédé selon la revendication 7, l'étape iii2/ comprenant l'application de la deuxième charge électrique ;

12. Procédé selon la revendication 7, l'étape iii2/ comprenant la mesure de l'amplitude de U2 ou I2 et de la phase avec le signal poursuivi avant la déconnexion de la première charge.

13. Application du procédé selon l'une des revendications précédentes pour envoyer de la puissance électrique à travers une paroi métallique, notamment une paroi métallique d'un navire, d'un sous-marin, d'un réservoir, d'une cuve, d'un tuyau.

**Patentansprüche**

1. Betriebsverfahren eines akustischen Übertragungssystems, das die folgenden Schritte enthält:
i/ Einsetzen des Systems (1) mit mindestens einem Emitter (2) und mindestens einem akustischen Empfänger (3) auf einem Träger, wobei das System ein elektrischer Vierpol ist, dessen Impedanzmatrix, die die Emitter- ($U_1$) und Empfängerspannungen ($U_2$) mit den Emitter- ($I_1$) und Empfängerströmen ($I_2$) verbindet, gemäß der folgenden Gleichung geschrieben wird:

[Gleichung 1]:
$$\begin{pmatrix} U_1 \\ U_2 \end{pmatrix} = \begin{pmatrix} Z_{11}(f) & Z_{12}(f) \\ Z_{21}(f) & Z_{22}(f) \end{pmatrix} \begin{pmatrix} I_1 \\ I_2 \end{pmatrix}$$

wobei der Vierpol reziprok ist, mit $Z_{12}$ gleich $Z_{21}$; **dadurch gekennzeichnet, dass** das Verfahren die Schritte enthält:

ii/ aufeinanderfolgende dreimalige Frequenzabtastung mit jedes Mal einer mit dem Empfänger $Z_{load}$ verbundenen elektrischen Ladung anders als die vorhergehende, um für jede Frequenz die Werte von $Z_{11}$, $Z_{12}$ und von $Z_{22}$ zu bestimmen,
iii/ ausgehend von der Bestimmung der Werte von $Z_{11}$, $Z_{12}$ und von $Z_{22}$, Bestimmung einer charakteristischen Frequenz ($f_{opt}$), um die übertragene Leistung, die Empfängerspannung ($U_2$) oder den Wirkungsgrad des Systems zu maximieren.

2. Verfahren nach Anspruch 1, wobei der Träger eine insbesondere metallische Wand ist, wobei der Emitter und der Empfänger auf der gleichen Seite oder auf beiden Seiten der Wand angeordnet sind.

3. Verfahren nach Anspruch 1 oder 2, wobei die mit dem Empfänger im Schritt ii/ verbundenen verschiedenen elektrischen Ladungen eine unendliche Ladung entsprechend einer für den Empfänger offenen elektrischen Schaltung, eine Ladung bekannten Werts, bzw. eine Ladung Null entsprechend einem Kurzschluss am Empfänger sind.

4. Verfahren nach einem der Ansprüche 1 bis 3, wobei die Dauer zwischen jeder Frequenzabtastung vom Empfänger definiert wird, der eine dem Emitter bekannte vordefinierte Dauer wartet.

**5.** Verfahren nach einem der Ansprüche 1 bis 3, wobei die Dauer zwischen jeder Frequenzabtastung vom Empfänger definiert wird, der dem Emitter durch einen Wechsel der verbundenen Ladung anzeigt, dass er bereit ist, dann die verbundene elektrische Ladung ändert.

**6.** Verfahren nach einem der Ansprüche 1 bis 3, wobei die Dauer zwischen jeder Frequenzabtastung von einer Änderung der Impedanz auf der Emitterseite ohne aktive Bauteile auf der Empfängerseite definiert wird.

**7.** Verfahren nach einem der vorhergehenden Ansprüche, wobei der Schritt iii/ die folgenden Teilschritte enthält:

iii1/ Bestimmung der charakteristischen Frequenz (fopt) ausgehend von der Bestimmung der bei jeder Frequenz (f) maximal erreichbaren Leistung durch die Beziehung

[Gleichung 9]:

$$\bar{P}(f) = \frac{1}{2}\mathcal{R}\left(Z_{22} - \frac{Z_{12}^2}{Z_{11}}\right)\left|\frac{Z_{12}}{2Z_{11}Z_{22} - 2Z_{12}^2}\right|^2$$

iii2/ Anwenden von zwei mit dem Empfänger Zload verbundenen voneinander unterschiedlichen elektrischen Ladungen beim Senden eines sinusförmigen Signals durch den Emitter, um die optimale elektrische Ladung zu bestimmen, ausgehend vom Thévenin-Theorem und der Beziehung

$$Z_{Load} = Z_{out}^*,$$

wobei die Bestimmung der charakteristischen Frequenz und die optimale elektrische Ladung es ermöglichen, die übertragene Leistung zu maximieren.

**8.** Verfahren nach Anspruch 7, wobei der Schritt iii2/ das Halten der Spannung U1 am Emitter (2) auf einer konstanten Frequenz, das Anwenden einer der zwei unterschiedlichen elektrischen Ladungen ohne Unterbrechung des Signals durch den Emitter enthält.

**9.** Verfahren nach Anspruch 7, wobei der Schritt iii2/ die Messung, auf der Seite des Empfängers (3), während der Verbindung der ersten elektrischen Ladung, der Amplitude des Signals der Spannung U2 oder des Stroms 12 enthält.

**10.** Verfahren nach Anspruch 7, wobei der Schritt iii2/ vor der Trennung der ersten elektrischen Ladung die Wiederholung eines Phasenelements enthält, als ob das sinusförmige Signal fortgesetzt würde.

**11.** Verfahren nach Anspruch 7, wobei der Schritt iii2/ die Anwendung der zweiten elektrischen Ladung enthält.

**12.** Verfahren nach Anspruch 7, wobei der Schritt iii2/ die Messung der Amplitude von U2 oder 12 und der Phase mit dem fortgesetzten Signal vor dem Trennen der ersten Ladung enthält.

**13.** Anwendung des Verfahrens nach einem der vorhergehenden Ansprüche, um elektrische Leistung durch eine metallische Wand hindurch zu schicken, insbesondere eine metallische Wand eines Schiffs, eines U-Boots, eines Reservoirs, eines Tanks, eines Rohrs.

**Claims**

**1.** Method for operating an acoustic transmission system, comprising the following steps:

i/ installing the system (1) with at least one emitter (2) and at least one acoustic receiver (3) on a support, the system being an electric quadrupole whose impedance matrix, linking the emitter voltage ($U_1$) and the receiver voltage ($U_2$) to the emitter current ($I_1$) and the receiver current ($I_2$), is written using the equation:

[Equation 1]:

$$\begin{pmatrix} U_1 \\ U_2 \end{pmatrix} = \begin{pmatrix} Z_{11}(f) & Z_{12}(f) \\ Z_{21}(f) & Z_{22}(f) \end{pmatrix} \begin{pmatrix} I_1 \\ I_2 \end{pmatrix}$$

the quadrupole being reciprocal, with $Z_{12}$ being equal to $Z_{21}$; **characterized in that** the method comprises the steps of:

ii/ performing frequency scanning three times in a row, each time with an electrical load connected to the receiver $Z_{load}$ distinct from the previous one, so as to determine the values of $Z_{11}$, $Z_{12}$ and $Z_{22}$ for each frequency;

iii/ based on the determination of the values of $Z_{11}$, $Z_{12}$ and $Z_{22}$, determining a characteristic frequency ($f_{opt}$) so as to maximize the transmitted power, the receiver voltage ($U_2$) or the efficiency of the system.

2. Method according to Claim 1, the support being a wall, in particular a metal wall, the emitter and the receiver being arranged on the same side or on either side of the wall.

3. Method according to Claim 1 or 2, the distinct electrical loads connected to the receiver in step ii/ being respectively an infinite load, corresponding to an open electrical circuit at the receiver, a load of known value, and a zero load, corresponding to a short circuit at the receiver.

4. Method according to one of Claims 1 to 3, the duration between each frequency scan being defined by the receiver, which waits for a predefined duration that is known to the emitter.

5. Method according to one of Claims 1 to 3, the duration between each frequency scan being defined by the receiver, which indicates to the emitter that it is ready by alternating the connected load, and then changes the connected electrical load.

6. Method according to one of Claims 1 to 3, the duration between each frequency scan being defined by a change in impedance at the emitter without active components at the receiver.

7. Method according to one of the preceding claims, step iii/ comprising the following sub-steps:

iii1/ determining the characteristic frequency (fopt) based on the determination of the maximum power achievable at each frequency (f) using the relationship

[Equation 9]:

$$\bar{P}(f) = \frac{1}{2} \Re \left( Z_{22} - \frac{Z_{12}^2}{Z_{11}} \right) \left| \frac{Z_{12}}{2Z_{11}Z_{22} - 2Z_{12}^2} \right|^2$$

iii2/ applying two electrical loads connected to the receiver Zload that are distinct from one another, when a sinusoidal signal is emitted by the emitter, so as to determine the optimum electrical load based on Thévenin's theorem and the relationship $Z_{Load} = Z_{out}^*$,

determining the characteristic frequency and the optimum electrical load for maximizing the transmitted power.

8. Method according to Claim 7, step iii2/ comprising keeping the voltage U1 at the emitter (2) at a constant frequency and applying one of the two distinct electrical loads without the emitter disconnecting the signal.

9. Method according to Claim 7, step iii2/ comprising measuring the amplitude of the signal of the voltage U2 or of the current 12 at the receiver (3) during the connection of the first electrical load.

10. Method according to Claim 7, step iii2/ comprising, before disconnecting the first electrical load, repeating a phase element as though the sinusoidal signal were continued.

11. Method according to Claim 7, step iii2/ comprising applying the second electrical load.

12. Method according to Claim 7, step iii2/ comprising measuring the amplitude of U2 or 12 and the phase with the continued signal before disconnecting the first load.

13. Application of the method according to one of the preceding claims in order to send electric power through a metal wall, in particular a metal wall of a vessel, a submarine, a tank, a container or a pipe.

[Fig 1]

Fig. 1

[Fig 2]

Fig. 2

[Fig 3]

Fig. 3

[Fig 4]

Fig. 4

[Fig 5]

EP 4 080 791 B1

**Left box (Etapes ii/ et iii1/):**

$Z_{Load} = +\infty$

Balayage en fréquence

$Z_{Load} = 0$

Balayage en fréquence

$Z_{Load} = Z$

Balayage en fréquence

Déterminer les paramètres du système

$$\begin{cases} Z_{11} = Z_{in}^{CO} \\ Z_{22} = Z\left(\dfrac{Z_{in}^{CO} - Z_{in}^{Z}}{Z_{in}^{Z} - Z_{in}^{CC}}\right) \\ Z_{12} = \sqrt{\dfrac{Z\left(Z_{in}^{CO} - Z_{in}^{CC}\right)\left(Z_{in}^{CO} - Z_{in}^{Z}\right)}{Z_{in}^{Z} - Z_{in}^{CC}}} \end{cases}$$

Déterminer la fréquence maximisant la puissance transmise

$$\bar{P}(f) = \frac{1}{2}\,\Re\left(Z_{22} - \frac{Z_{12}^2}{Z_{11}}\right)\left|\frac{Z_{12}}{2Z_{11}Z_{22} - 2Z_{12}^2}\right|^2$$

— Etapes ii/ et iii1/

**Emission continue à fopt**

**Right box (Etape iii2/):**

$Z_{Load} = +\infty$

$Z_{Load} = 0$

Dèterminer la charge optimale

$$Z_{opt} = \left(-\frac{U_2^{CO}}{I_2^{CC}}\right)$$

— Etape iii2/

## Fig. 5

[Fig 6]

Fig. 6

[Fig 7]

Algorithme Émetteur

Algorithme Récepteur

| | |
|---|---|
| **ReposE** | |
| ┼ Start | |
| **Scan1E** | L'émetteur balai les fréquences dans une bande de fréquence définie et mesure l'impédance Zin(f) |
| ┼ Cond1E | |
| **Scan2E** | L'émetteur balai les fréquences dans une bande de fréquence définie et mesure l'impédance Zin(f) |
| ┼ Cond2E | |
| **Scan3E** | L'émetteur balai les fréquences dans une bande de fréquence définie et mesure l'impédance Zin(f) |
| ┼ Balayage de fréquence terminé | |
| **Géné-foptE** | Détermination des paramètres Application de la fréquence optimale |
| ┼ Cond3E | |
| **FctNormalE** | Communication et transmission de puissance opérationnelles |
| ┼ Arrêt | |

| | |
|---|---|
| **ReposR** | Zload=Zload1 (impédance par défaut) |
| ┼ Cond1R | |
| **Zload2R** | Zload=Zload2 |
| ┼ Cond2R | |
| **Zload3R** | Zload=Zload3 |
| ┼ Cond3R | |
| **Zload4R** | Zload=Zload4 Mesure U2 et/ou I2 |
| ┼ Fin mesure U2 et/ou I2 | |
| **Zload5R** | Zload=Zload5 Mesure U2 et/ou I2 |
| ┼ Fin mesure U2 et/ou I2 | |
| **FctNormalR** | Calcul de Zopt Zload=Zopt Communication et transmission de puissance opérationnelles |
| ┼ Energie/ tension insuffisante | |

# Fig. 7

## RÉFÉRENCES CITÉES DANS LA DESCRIPTION

**Documents brevets cités dans la description**

- US 20200204271 A
- US 20150049587 A
- US 20140016558 A
- US 20100027379 A

**Littérature non-brevet citée dans la description**

- **T. J. LAWRY et al.** Electrical optimization of power delivery through thick steel barriers using piezoelectric transducers. *Energy Harvesting and Storage: Materials, Devices, and Applications,* Avril 2010, vol. 7683, 768314
- **O. FREYCHET ; F. FRASSATI ; S. BOISSEAU ; N. GARRAUD ; P. GASNIER ; G. DESPESSE.** Analytical optimization ofpiezoelectric acoustic power transfer systems. *Eng. Res. Express,* Novembre 2010, vol. 2 (4), 045022
- **O. FREYCHET et al.** Efficient optimal load and maximum output power determination for linear vibration energy harvesters with a two-measurement characterization method. *Smart Mater. Struct.,* Novembre 2019, vol. 29 (1), 015003
- **G. J. SAULNIER et al.** P1G-4 Through-Wall Communication of Low-Rate Digital Data Using Ultrasound. *2006 IEEE Ultrasonics Symposium,* Octobre 2006, 1385-1389